# EUROPEAN PATENT SPECIFICATION

(11) **EP 1 437 048 B1**
(45) Date of publication and mention of the grant of the patent: **07.12.2005**
(21) Application number: 01274596.4
(22) Date of filing: 20.12.2001
(51) Int. Cl.: A23G 3/00, A23G 1/00, A23L 1/00, A23P 1/06

(54) **CONFECTIONERY TOPPINGS HAVING EXCELLENT FAT-TOLERANCE**
GARNITUR FÜR SÜSSWAREN MIT AUSGEZEICHNETER FETTVERTRÄGLICHKEIT
GARNITURE DE CONFISERIE PRESENTANT UNE EXCELLENTE TOLERANCE AUX GRAISSES

(30) Priority: 18.10.2001 JP 2001320164
(43) Date of publication of application: 14.07.2004
(73) Proprietor: TOKUKURA CO., LTD., Koto-ku, Tokyo 136-0073 (JP)
(72) Inventor: WATANABE, Takao, Setagaya-ku, Tokyo 155-0032 (JP)
(74) Representative: Gillard, Richard Edward
(86) International application number: PCT/JP2001/011181
(87) International publication number: WO 2003/034833

(56) References cited:
- EP-A2- 0 245 871
- EP-A2- 0 290 065
- JP-A- 7 075 501
- JP-A- 55 000 360
- JP-A- 60 030 636
- JP-A- 2000 264 835
- US-A- 5 304 389
- US-A- 5 556 631
- US-A- 5 571 555

## Description

### TECHNICAL FIELD

The present invention relates to a confectionery topping or topping composition excellent in fat and oil resistance which when poured or spread over chocolate, butter and other foodstuffs containing low-melting fats and/or oils, will remain non-oil-absorbing, will hardly undergo discoloration and can retain the state thereof just after pouring or spreading for a long period of time without impairing the taste of such foodstuffs.

### BACKGROUND ART

Toppings, such as sugars and cocoa powders, when poured or spread over chocolate, butter, cakes and like foodstuffs which contain low-melting fats and oils, and allowed to stand, are often discolored, impairing the taste of the foodstuffs and markedly reducing the commercial value thereof because of absorption of fats and oils.

The present inventor has already developed a nonhygroscopic topping for confectionery use by coating a topping material, such as a sugar or cocoa, with a sucrose fatty acid ester whose constituent fatty acid or acids contain 8 to 22 carbon atoms and which has an average degree of substitution of not less than 2 (see Japanese Patent No. 2,629,596). This prior art patented topping has nonhygroscopicity as well as fat and oil resistance owing to which it will not discolor even when poured or spread over breads, doughnuts or the like.

While the above-mentioned nonhygroscopic and non-oil-absorbing topping for confectionery use as developed by the present inventors, when used by pouring or spreading over breads, doughnuts, cakes and the like, retains the state just after pouring or spreading, without discoloration, it shows a tendency toward absorption of low-melting fats and oils when poured or spread over chocolate, butter and like foodstuffs containing low-melting fats and oils. Thus, it cannot be said to be fully satisfactory from the fat and oil resistance viewpoint.

### DISCLOSURE OF INVENTION

Therefore, it is an object of the present invention to provide a confectionery topping excellent in fat and oil resistance which when poured or spread over chocolate, butter and like foodstuffs containing low-melting fats and/or oils, will not undergo discoloration or any change in quality for a long period of time.

The present inventor investigated the effects of coating of confectionery toppings with various fats and oils, emulsifiers as food additives, and the like on the behaviors of the toppings and, as a result, found that when topping materials are coated with a specific sucrose fatty acid ester falling within a limited range, confectionery toppings which even when poured or spread over foodstuffs containing low-melting fats and oils, will not undergo discoloration or any change in quality due to wetting with fats and oils can be obtained. Based on such findings, the present invention has now been completed.

Thus, the confectionery topping excellent in fat and oil resistance according to the present invention is characterized in that it comprises a confectionery topping material coated with a sucrose fatty acid ester which has a monoester content, among fatty acid ester components thereof, of not more than 10% by weight and has a melting point of not lower than 50°C but not higher than 90°C.

The sucrose fatty acid ester used for coating purposes in the above described prior art patent, when the average degree of fatty acid ester substitution is not less than 2, shows the effects of nonhygroscopicity and non-oil-absorption, irrespective of monoester content. However, subsequent studies made by the present inventor revealed that the monoester content greatly influences especially on the fat and oil resistance-producing effect and, further, that a monoester content of 10% by weight or less is required for the manifestation of fat and oil resistance.

Generally speaking, it has been common sense to consider that hydrophilic sucrose fatty acid esters having a higher content of monoesters (ester substitution degree = 1) resulting from ester bonding of only one hydroxyl group, among 8 hydroxyl groups of each sucrose molecule, with a fatty acid are higher in fat and oil resistance. However, contrary to such teaching of common sense, the present inventor empirically found that the hydrophilicity of sucrose fatty acid esters is rather against the fat and oil resistance thereof, and he confirmed, by experiments, that when the surface of a topping material, such as a sugar or cocoa, is coated with a sucrose fatty acid ester the monoester content of which is not more than 10% by weight, the wettability of the topping material surface with fats and oils decreases and the fat and oil resistance increases. Such phenomena may be said to be quite unexpected to those skilled in the art.

### BEST MODES FOR CARRYING OUT THE INVENTION

The sucrose fatty acid ester to be used in accordance with the present invention has a monoester content, among fatty acid ester components, of not more than 10% by weight. A monoester-free sucrose fatty acid ester whose monoester content is 0% by weight may also be used.

As for the melting point of the sucrose fatty acid ester to be used in the practice of the present invention, those esters having a melting point lower than 50°C are unsatisfactory from the practical fat and oil resistance viewpoint even when their monoester content is 10% by weight or lower. When, conversely, the melting point exceeds 90°C, the operation temperature necessary for coating increases, making it difficult to carry out the coating operation in practical equipment. Therefore, a sucrose fatty acid ester having a melting point of not lower than 50°C but not higher than 90°C is to be used.

The confectionery topping material to be used in the practice of the present invention includes sugars such as those in conventional use, for example granulated sugar, which is a high purity grade of sucrose, glucose, fructose and various oligosaccharides, and sugar alcohols and, further, powdered sugars derived from such sugars by pulverizing, cocoa powders, various colorants or coloring materials, and other confectionery materials in powder or crystalline form, for instance, for decorating the surface of confectionery.

In coating such a topping material with the sucrose fatty acid ester, various methods can be employed, for example the method comprising dissolving the sucrose fatty acid ester in an alcohol and spraying the solution, the fluidized bed drying method comprising admixing the sucrose fatty acid ester with a topping material and blowing high-temperature air to the resulting mixture, and the mixing and heating method comprising admixing the sucrose fatty acid ester with a topping material, heating the mixture to 50°C or above with agitating and then cooling the same.

If necessary, fats and oils having a melting point of not lower than 40°C may be used in combination with the sucrose fatty acid ester in the step of coating so that the flowability of the topping material may be reduced and the stickiness of the sucrose fatty acid ester may be increased.

The following examples, comparative examples and test examples illustrate the present invention in more detail. In the following, "%" means " % by weight".

### [Example 1]

The sucrose fatty acid ester specified below (the fatty acid ester moieties being hardened beef tallow fatty acid ester moieties) was added, at an addition level of 2%, to a cocoa powder (fat and oil content 22%), and the cocoa powder was coated with the sucrose fatty acid ester by heating the mixture to 65°C with stirring and then cooled to 30°C with stirring.
Sucrose monofatty acid ester content: 8%
Sucrose di-, tri- and polyfatty acid esters: 92%
Sucrose fatty acid ester melting point : 65°C

### [Example 2]

The sucrose fatty acid ester specified below (the fatty acid ester moieties being hardened beef tallow fatty acid ester moieties) was added, at an addition level of 2%, to a cocoa powder (fat and oil content 22%), and the cocoa powder was coated with the sucrose fatty acid ester by heating the mixture to 65°C with stirring and then cooled to 30°C with stirring.
Sucrose monofatty acid ester content: 0%
Sucrose di-, tri- and polyfatty acid esters: 100%
Sucrose fatty acid ester melting point: 65°C

### [Example 3]

The sucrose fatty acid ester specified below (the fatty acid ester moieties being hardened beef tallow fatty acid ester moieties) was added, at an addition level of 2%, to powdered sugar prepared by pulverizing sugar, and the powdered sugar was coated with the sucrose fatty acid ester by heating the mixture to 70°C with stirring and then cooled to 40°C with stirring.
Sucrose monofatty acid ester content: 0%
Sucrose di-, tri- and polyfatty acid esters: 100%
Sucrose fatty acid ester melting point: 70°C

### [Comparative Example 1]

The sucrose fatty acid ester specified below (the fatty acid ester moieties being hardened beef tallow fatty acid ester moieties) was added, at an addition level of 2%, to a cocoa powder (fat and oil content 22%), and the cocoa powder was coated with the sucrose fatty acid ester by heating the mixture to 65°C with stirring and then cooled to 30°C with stirring.
Sucrose monofatty acid ester content: 15%
Sucrose di-, tri- and polyfatty acid esters: 85%
Sucrose fatty acid ester melting point: 60°C

### [Comparative Example 2]

The sucrose fatty acid ester specified below (the fatty acid ester moieties being oleic acid ester moieties) was added, at an addition level of 2%, to a cocoa powder (fat and oil content 22%), and the cocoa powder was coated with the sucrose fatty acid ester by heating the mixture to 65°C with stirring and then cooled to 30°C with stirring.
Sucrose monofatty acid ester content: 0%
Sucrose di-, tri- and polyfatty acid esters: 100%
Sucrose fatty acid ester melting point: 35°C

### [Comparative Example 3]

The sucrose fatty acid ester specified below (the fatty acid ester moieties being hardened beef tallow fatty acid ester moieties) was added, at an addition level of 2%, to a cocoa powder (fat and oil content 17%), and the cocoa powder was coated with the sucrose fatty acid ester by heating the mixture to 65°C with stirring and then cooled to 30°C with stirring.
Sucrose monofatty acid ester content: 50%
Sucrose di-, tri- and polyfatty acid esters: 50%
Sucrose fatty acid ester melting point: 65°C

### [Comparative Example 4]

The sucrose fatty acid ester specified below (the fatty acid ester moieties being hardened beef tallow fatty acid ester moieties) was added, at an addition level of 2%, to powdered sugar prepared by pulverizing sugar, and the powdered sugar was coated with the sucrose fatty acid ester by heating the mixture to 70°C with stirring and then cooled to 40°C with stirring.
Sucrose monofatty acid ester content: 50%
Sucrose di-, tri- and polyfatty acid esters: 50%
Sucrose fatty acid ester melting point: 65°C

### [Test Example 1]

The cocoa powders obtained in Examples 1 and 2 and Comparative Examples 1 to 3 were each sprayed on a commercial grade of butter, then heated in a microwave oven for one minute and 30 seconds, and examined for the changes in state of each cocoa powder on the butter surface. The corresponding untreated cocoa powder, without coating treatment, was also tested in the same manner. The results obtained are shown below.

| | Condition of cocoa |
|---|---|
| Example 1 | No discoloration, no change |
| Example 2 | No discoloration, no change |
| Comparative Example 1 | Partially blackened |
| Comparative Example 2 | Partially blackened |
| Comparative Example 3 | Totally blackened |
| Untreated cocoa powder | Totally blackened |

### [Test Example 2]

Five grams of each of the cocoa powders obtained in Examples 1 and 2 and Comparative Examples 1 to 3 was gently set afloat on the surface of 300 g of a commercial grade of salad oil placed in a 500-mL beaker, and the time until the powder began to sink and the time until sinking of the whole amount of the powder were measured. The corresponding untreated cocoa powder, without coating treatment, was also tested in the same manner. The results obtained are shown below.

It may be said that the slower the start of sinking is and/or the longer the time until complete sinking is, the better the fat and oil resistance is.

| | Time until start of sinking | Time until complete sinking |
|---|---|---|
| Example 1 | 30 minu | ≧ 150 hours |
| Example 2 | 45 minutes | ≧ 150 hours |
| Compar. Example 1 | 20 seconds | 96 hours |
| Compar. Example 2 | 20 seconds | 90 hours |
| Compar. Example 3 | 15 seconds | 50 minutes |
| Untreated cocoa | 5 seconds | 3 min 38 sec |

### [Test Example 3]

Five grams of each of the sugar powders obtained in Example 3 and Comparative Example 4 was gently set afloat on the surface of 300 g of a commercial grade of salad oil placed in a 500-mL beaker, and the time until the powder began to sink and the time until sinking of the whole amount of the powder were measured. The corresponding untreated powdered sugar, without coating treatment, was also tested in the same manner. The results obtained are shown below.

| | Time until start of sinking | Time until complete sinking |
|---|---|---|
| Example 3 | 15 minutes | ≧ 24 hours |
| Compar. Example 4 | 3 minutes | 15 minutes |
| Untreated powder sugar | 0 second | 3 seconds |

### [Test Example 4]

A rectangular strip of filter paper was immersed in a 2% isopropyl alcohol solution of each of the sucrose fatty acid esters used in Examples 1 and 2 and Comparative Examples 1 to 3, then taken out and dried. One end of this filter paper strip was then immersed in salad oil, and how far the salad oil ascended on the filter paper in 10 minutes was measured in the same manner as in paper chromatography. The corresponding filter paper strip not impregnated with any sucrose fatty acid ester was also tested in the same manner. The results obtained are shown below.

Since fat and oil resistance is correlated with oil repellency, a sucrose fatty acid ester giving a lower height of ascending of salad oil absorbed by a sucrose fatty acid-impregnated filter paper strip can be judged to be higher in oil repellency, namely in fat and oil resistance.

| | Monoester content | Melting point | Distance of ascending (mm) |
|---|---|---|---|
| SE used in Example 1 | 8% | 65°C | 5 |
| SE used in Example 2 | 0% | 65°C | 5 |
| SE used in Comp. Ex. 1 | 15% | 60°C | 23 |
| SE used in Comp. Ex. 2 | 0% | 35°C | 20 |
| SE used in Comp. Ex. 3 | 50% | 65°C | 35 |
| Untreated filter paper | - | - | 50 |
| (Note: SE stands for sucrose fatty acid ester.) | | | |

### INDUSTRIAL APPLICABILITY

As is evident from the above test examples, the confectionery topping of the present invention coated with a sucrose fatty acid having a monoester content, among fatty acid ester components thereof, of not more than 10% by weight and having a melting point of not lower than 50°C but not higher than 90°C is excellent in fat and oil resistance. Therefore, even when poured or spread over chocolate, butter and like confectionery containing low-melting fats and oils and stored for a prolonged period of time, it will not undergo any discoloration or denaturation, making it possible to maintain the commercial value of the confectionery and extend the range of utilization thereof.

## Claims

1. A confectionery topping excellent in fat and oil resistance which comprises a confectionery topping material coated with a sucrose fatty acid ester having a monoester content, among fatty acid ester components thereof, of not more than 10% by weight and having a melting point of not lower than 50°C but not higher than 90°C.

2. The confectionery topping according to Claim 1, wherein the monoester content is 0% by weight.

3. The confectionery topping according to Claim 1 or 2, wherein the confectionery topping material is a sugar, a powdered sugar resulting from pulverizing a sugar, a cocoa powder or a coloring material.

4. A method for improving fat and oil resistance of a confectionery topping which comprising coating a confectionery topping material with a sucrose fatty acid ester having a monoester content, among fatty acid ester components thereof, of not more than 10 % by weight and having a melting point of not lower than 50°C but not higher than 90°C.

## Patentansprüche

1. Überzug für Süßwaren mit ausgezeichneter Fett- und Ölverträglichkeit, welcher ein Überzugsmaterial für Süßwaren umfasst, das mit einem Saccharosefettsäureester beschichtet ist, der, unter den Fettsäureesterkomponenten des Überzugsmaterials, einen Monoestergehalt von nicht mehr als 10 Gew.-% und einen Schmelzpunkt von nicht niedriger als 50°C aber nicht höher als 90°C aufweist.

2. Überzug für Süßwaren nach Anspruch 1, worin der Monoestergehalt 0 Gew.-% beträgt.

3. Überzug für Süßwaren nach Anspruch 1 oder 2, worin das Überzugsmaterial für Süßwaren ein Zucker, ein Puderzucker, der durch Pulverisieren aus Zucker entsteht, ein Kakaopulver oder ein farbgebender Stoff ist.

4. Verfahren zur Verbesserung der Fett- und Ölverträglichkeit eines Überzugs für Süßwaren, welches das Überziehen eines Überzugsmaterials für Süßwaren mit einem Saccharosefettsäureester umfasst, der, unter den Fettsäureestern des Überzugsmaterials, einen Monoestergehalt von nicht mehr als 10 Gew.-% und einen Schmelzpunkt von nicht niedriger als 50°C aber nicht höher als 90°C aufweist.

## Revendications

1. Garniture de confiserie possédant une résistance excellente aux graisses et aux huiles, qui comprend une matière de garniture de confiserie recouverte d'un ester d'acide gras de saccharose possédant une teneur en monoester, parmi ses composants d'esters d'acides gras, qui n'est pas supérieure à 10 % en poids et possédant un point de fusion qui n'est pas inférieur à 50 °C, mais qui n'est pas supérieur à 90 °C.

2. Garniture de confiserie selon la revendication 1, dans laquelle la teneur en monoester s'élève à 0 % en poids.

3. Garniture de confiserie selon la revendication 1 ou 2, dans laquelle la matière de garniture de confiserie est un sucre, un sucre en poudre résultant de la pulvérisation d'un sucre, une poudre de cacao ou une matière colorante.

4. Procédé pour améliorer la résistance aux graisses et aux huiles, manifestée par une garniture de confiserie, qui comprend le fait de recouvrir une matière de garniture de confiserie d'un ester d'acide gras de saccharose possédant une teneur en monoester, parmi ses composants d'esters d'acides gras, qui n'est pas supérieure à 10% en poids et possédant un point de fusion qui n'est pas inférieur à 50 °C, mais qui n'est pas supérieur à 90 °C.
